# FASCICULE DE BREVET EUROPEEN

(11) **EP 2 690 710 B1**
(45) Date de publication et mention de la délivrance du brevet: **22.04.2015**
(21) Numéro de dépôt: 13174823.8
(22) Date de dépôt: 03.07.2013
(51) Int. Cl.: H01R 9/26, H02B 1/20

(54) **Procédé de fabrication d un dispositif de raccordement électrique des bornes appartenant a plusieurs appareils électriques modulaires, et dispositif de raccordement obtenu selon ce procédé**
Verfahren zur Herstellung einer Brücke zum elektrischen Verbinden von Klemmen mehrerer modularer elektrischer Geräte, und Brücke die mit diesem Verfahren hergestellt wurde.
Method for manufacturing a device for electric connection of the terminals belonging to several modular electric units, and connection device obtained by means of this method

(30) Priorité: 27.07.2012 FR 1257288
(43) Date de publication de la demande: 29.01.2014
(73) Titulaire: Schneider Electric Industries SAS, 92500 Rueil-Malmaison (FR)
(72) Inventeur: Pastor, Jean-Vincent, 38050 Grenoble Cedex 09 (FR); Vallier, Romain, 38050 Grenoble Cedex 09 (FR); Voinson, Dorothée, 38050 Grenoble Cedex 09 (FR)
(74) Mandataire: Colette, Marie-Françoise

(56) Documents cités:
- EP-A1- 1 111 733
- DE-U- 1 930 072
- FR-A1- 2 579 377
- FR-A7- 2 190 319

## Description

### DOMAINE TECHNIQUE.

La présente invention concerne un procédé de fabrication d'un dispositif de raccordement électrique des bornes appartenant à plusieurs appareils électriques modulaires montés côte à côte sur un support de montage, ledit dispositif comportant une première partie destinée au transport du courant et comportant un corps longitudinal, et une seconde partie destinée à la distribution du courant auxdits appareils, cette seconde partie comportant un certain nombre de dents s'étendant sensiblement perpendiculairement audit corps et destinées à être introduites respectivement dans les bornes desdits appareils, ainsi qu'un dispositif de raccordement électrique susceptible d'être obtenu selon ce procédé.

### ETAT DE LA TECHNIQUE ANTERIEURE.

On connaît le document FR 2 579 377 décrivant un peigne de raccordement réalisé par découpage et pliage d'une bande de cuivre.
Or, ce mode de fabrication génère des taux de chute de matière avoisinant les 50%, et le peigne réalisé présente un prix de revient particulièrement élevé.
On connaît également le document DE 19 30072 décrivant un dispositif de raccordement comportant deux conducteurs dont l'un est formé d'un corps longitudinal tandis que l'autre est formé d'un corps longitudinal comportant à intervalles réguliers des parties pliées de manière à réaliser des dents de peigne.

La présente invention résout ces problèmes et propose un procédé de fabrication d'un dispositif de raccordement, quelque soit son calibre, ne générant pas de déchet matière et permettant d'utiliser la quantité juste nécessaire de matériau les moins chers.

A cet effet, la présente invention a pour objet un procédé de fabrication d'un dispositif de raccordement selon la revendication 1.

Selon une réalisation particulière, les dents précitées sont réalisées par pliage et conformage dudit second fil conducteur, de manière à former une succession de dents constituées chacune par superposition des deux parties situées de part et d'autre d'une zone de pliage.

Selon une caractéristique particulière, la liaison mécanique et électrique des deux parties entre-elles, est réalisée au niveau des portions du second conducteur situées entre deux dents successives et/ou entre ces portions, lesdites portions s'étendant sensiblement parallèlement à la direction longitudinale du corps longitudinal.

Selon une autre caractéristique, la première partie est réalisée à partir d'un fil conducteur d'aluminium plaqué cuivre ou non, tandis que la seconde partie est réalisée à partir d'un fil conducteur d'aluminium plaqué cuivre, ou bien en cuivre massif.

Selon une autre caractéristique, la valeur de la section du fil conducteur d'aluminium est multipliée environ par 1,6 par rapport à la valeur de la section d'un fil de cuivre destiné à transporter la même quantité de courant.

Selon une autre caractéristique, le (les) fil(s) réalisé(s) en aluminium plaqué cuivre présente (nt) une proportion de 10 à 20% de cuivre en section.

Selon une autre caractéristique, le calibre des appareils étant de 63A, la section du conducteur dit second conducteur est d'environ 4mm², tandis que la section du premier conducteur est environ de 12mm².

Selon une autre caractéristique, le pliage et le conformage précités sont réalisés par l'intermédiaire de moyens de formage appropriés.

Selon une autre caractéristique, l'assemblage mécanique et électrique des deux conducteurs précités est réalisé par brasure ou soudure.

La présente invention a encore pour objet un dispositif de raccordement électrique des bornes appartenant à plusieurs appareils électriques modulaires montés côte à côte sur un même support de montage, ce dispositif étant **caractérisé en ce qu'il** est obtenu par l'intermédiaire d'un procédé de fabrication comportant les caractéristiques précédemment mentionnées prises seules ou en combinaison.

La présente invention a encore pour objet un dispositif de raccordement électrique des bornes appartenant à plusieurs appareils électriques modulaires montés côte à côte sur un même support de montage, ce dispositif étant **caractérisé en ce** qu'il comporte une première partie dite de transport du courant, comportant un corps longitudinal réalisé en aluminium plaqué cuivre ou non, et une seconde partie dite de raccordement électrique comportant des dents s'étendant suivant une direction sensiblement perpendiculaire à la direction longitudinale dudit corps longitudinal, cette seconde partie étant réalisée en aluminium plaqué cuivre ou bien en cuivre massif, les valeurs des sections des premier et second conducteurs précités étant ajustées en fonction du calibre des appareils à raccorder, ce dispositif étant susceptible d'être fabriqué au moyen d'un procédé comportant les caractéristiques précédemment mentionnées prises seules ou en combinaison. Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue partielle en perspective, d'un dispositif de raccordement obtenu selon un mode de réalisation particulier du procédé selon l'invention, avant la mise en place d'une isolation sur le dispositif, et -
- La figure 2 est une vue identique à la figure précédente, après mise en place d'un capot d'isolation sur le dispositif de raccordement.

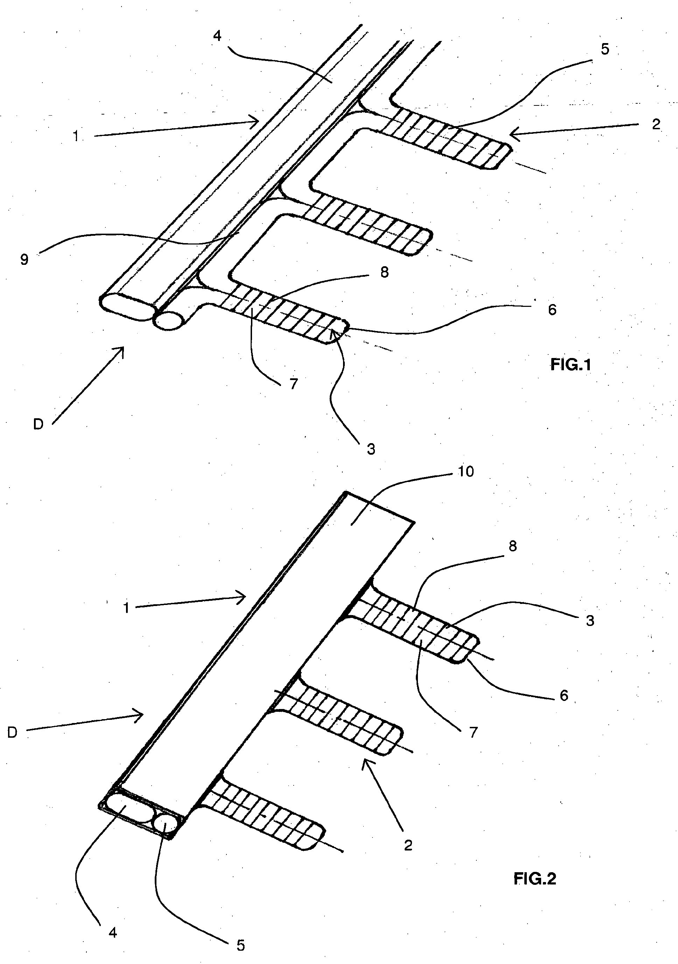

Sur la figure 1, on voit un dispositif de raccordement électrique D selon une réalisation particulière de l'invention, ledit dispositif étant destiné à relier électriquement un certain nombre d'appareils modulaires de protection électrique montés sur un rail de montage (ces appareils et ce rail n'étant pas représentés). Ce dispositif comporte une première partie 1 dite de transport, destinée à assurer le transport du courant le long de la rangée d'appareils, et une seconde partie 2 dite de raccordement électrique, destinée à distribuer ce courant aux différents appareils par l'intermédiaire d'éléments de raccordement sous la forme de dents 3 destinées à être introduites dans les bornes correspondantes des appareils, cette seconde partie 2 contribuant également, dans une moindre mesure, au transport du courant.
Cette première partie comporte un premier fil conducteur 4 comportant un corps longitudinal sous forme de barre, présentant avantageusement une section de forme sensiblement ellipsoïdale aplatie, cette partie étant réalisée en aluminium seul ou en aluminium plaqué cuivre. Le placage cuivre signifie que la partie de cuivre constitue l'enveloppe extérieure du conducteur tandis que l'âme du conducteur est en aluminium.
Avantageusement, la teneur en cuivre de ce conducteur sera de 10 à 20 % sur la section du conducteur.
La seconde partie précitée 2 de ce dispositif est constituée par un second fil conducteur 5 plié et conformé de manière à former une succession de dents 3, chacune des dents étant constituée par la superposition de deux portions de conducteurs 7,8 situées de part et d'autre des zones de pliage 6. Ce conducteur est avantageusement réalisé en aluminium plaqué cuivre, et présente une section inférieure à celle du conducteur de la première partie, car il est destiné à transporter une plus petite quantité de courant. Le conformage et le pliage précités sont avantageusement réalisés au moyen d'une machine du type à coulisseaux multiples, ou tout autre procédé de mise en forme.
Ces deux conducteurs 4,5 sont reliés mécaniquement et électriquement par exemple par une soudure ou une brasure, ou tout autre moyen d'assemblage mécanique et électrique au niveau des portions 9 du second conducteur 5 situées entre deux dents successives 3, et/ou entre ces portions 9.

L'utilisation d'un fil conducteur en aluminium plaqué en cuivre permet de maximiser la proportion d'aluminium dans le conducteur tout en conservant un contact électrique sur la partie de recouvrement en cuivre identique au produit actuel réalisé totalement en cuivre.
L'utilisation de l'aluminium permet de tirer partie du prix plus faible de l'aluminium pour conduire des courants électriques à 50Hz et 60 Hz, dans des applications du domaine de la distribution de puissance.
On notera que la conductivité de l'aluminium étant inférieure à celle du cuivre, il est nécessaire d'appliquer un coefficient d'environ 1,6 sur la section du conducteur en aluminium afin d'obtenir la même capacité de conduction du courant. Ainsi, la section d'un conducteur en aluminium est 1,6 fois plus élevée que celle d'un conducteur en cuivre destiné à transporter la même quantité de courant.
Lors de l'utilisation d'un plaquage sur le conducteur 4 destiné à transporter le courant, ce plaquage en cuivre sert à protéger l'aluminium contre l'oxydation, à permettre l'assemblage électrique et mécanique des fils conducteurs, alors que l'utilisation d'un tel plaquage sur le deuxième conducteur 5 permet en outre des fonctions qui viennent d'être énoncées, de procurer une qualité de contact sur cuivre.
L'utilisation de plusieurs fils de sections adéquates 4,5 permet de réaliser tant la fonction transport, que la fonction raccordement, sans générer de perte de matière dans le processus de fabrication.

Un calcul d'équivalence est donc à réaliser pour chaque fonction du peigne. La fonction transport du courant est réalisée par l'ensemble des deux conducteurs 4,5 mais majoritairement par le conducteur 4 de gros calibre, tandis que la fonction de raccordement sera réalisée via les dents 3 de distribution par un fil conducteur au calibre plus petit juste nécessaire.
On notera que le fil conducteur de transport 4 n'ayant pas de fonction de contact électrique, il peut être réalisé en aluminium sans plaquage cuivre.
Ainsi, la mise en forme et l'association mécanique et électrique adéquate de ces deux fils permet de réaliser un peigne monobloc, sans perte de matière.
Les coûts de matière d'un peigne réalisé selon l'invention sont inférieurs d'environ 50% par rapport aux coûts associés aux procédés actuels.

### Exemple de réalisation pour une application de 63A :

Pour la fonction raccordement :
La section actuelle d'un conducteur en cuivre est de 1,3 x 4= 5,2 mm ².
La section d'une dent 3 constituée par un conducteur en aluminium selon l'invention, ladite dent étant destinée à réaliser cette même fonction, sera de 5,2 x 1,6= 8,3mm², soit pour un fil de 4,16mm ².

La fonction transport est réalisée d'une part, au moyen d'un conducteur de gros calibre 4, et d'autre part, dans une moindre mesure, au moyen du second conducteur 5 destiné à assurer la fonction raccordement, ledit second conducteur étant juxtaposé au premier conducteur 4.
La section actuelle pour un conducteur en cuivre est de 1,3 x 7,7 =10mm².
La nouvelle section du conducteur en aluminium selon l'invention sera de 10 x 1,6 = 16 mm ², ce qui correspond à la section de l'association des deux conducteurs. Ainsi, la section du second conducteur 5 seul sera avantageusement de 16-4= 12mm².
Ainsi, les sections utilisées pour un peigne de 63A sont de 16mm² (12+4) pour la fonction transport, et 4 mm ² pour la fonction raccordement.

Avantageusement, le pliage et le conformage pourront être réalisés par tout moyen industriel de formage approprié tel qu'au moyen d'une machine de type à coulisseaux multiples ou au moyen de presses avec outils à suivre.

L'invention s'applique à tout dispositif de raccordement comportant des dents de distribution électriques.

Bien entendu, l'invention n'est pas limitée au mode de réalisation décrit et illustré qui n'a été donné qu'à titre d'exemple.

C'est ainsi par exemple que l'assemblage mécanique et électrique des deux conducteurs précités peut être réalisé par tout autre moyen approprié permettant de réaliser un assemblage mécanique et électrique.

L'invention couvre également un dispositif de raccordement réalisé en un autre matériau que l'aluminium tel que par exemple en cuivre seul, en laiton, en argent etc....

En effet, la réalisation d'un dispositif de raccordement selon l'invention en cuivre massif permet déjà de réaliser un dispositif de raccordement à coût réduit.

Au contraire, l'invention comprend tous les équivalents techniques des moyens décrits ainsi que leurs combinaisons si celles-ci sont réalisées suivant son esprit.

## Revendications

1. Procédé de fabrication d'un dispositif de raccordement électrique des bornes appartenant à plusieurs appareils électriques modulaires montés côte à côte sur un même support de montage, ledit dispositif comportant une première partie (1) destinée au transport du courant et comportant un corps longitudinal, et une seconde partie (2) destinée à la distribution du courant auxdits appareils, cette seconde partie comportant un certain nombre de dents (3) s'étendant sensiblement perpendiculairement audit corps et destinées à être introduites respectivement dans les bornes desdits appareils, consistant à prendre deux fils conducteurs distincts (4,5) pour réaliser respectivement la première (1) et la seconde (2) partie précitées, lesdits fils conducteurs étant réalisés principalement en aluminium, le premier fil conducteur étant d'un plus gros calibre que le second, puis à réaliser à partir du second fil conducteur (5) les dents précitées (3), puis à relier mécaniquement et électriquement ces deux fils conducteurs (4,5) l'un à l'autre, les sections des premier et second fils conducteurs précités étant adaptées de manière à ajuster le calibre desdits conducteurs sensiblement à la valeur juste nécessaire pour réaliser les fonctions respectivement de transport et de raccordement électrique précitées, la fonction transport étant réalisée par l'ensemble des deux conducteurs mais majoritairement par le conducteur de gros calibre, tandis que la fonction de raccordement est réalisée par le second conducteur au calibre plus petit juste nécessaire.

2. Procédé de fabrication d'un dispositif de raccordement selon la revendication 1, **caractérisé en ce que** les dents précitées (3) sont réalisées par pliage et conformage dudit second fil conducteur (5), de manière à former une succession de dents (3) constituées chacune par superposition des deux parties (7,8) situées de part et d'autre d'une zone de pliage (6).

3. Procédé de fabrication d'un dispositif de raccordement selon la revendication 2, **caractérisé en ce que** la liaison mécanique et électrique des deux parties (1,2) entre-elles, est réalisée au niveau des portions (9) du second conducteur (5) situées entre deux dents successives (3), et/ou entre ces portions, lesdites portions (9) s'étendant sensiblement parallèlement à la direction longitudinale du corps longitudinal (4).

4. Procédé de fabrication selon l'une quelconque des revendications 1 à 3, **caractérisé en ce que** la première partie (1) est réalisée à partir d'un fil conducteur d'aluminium plaqué cuivre ou non (4), tandis que la seconde partie (2) est réalisée à partir d'un fil conducteur d'aluminium plaqué cuivre (5), ou bien en cuivre massif.

5. Procédé de fabrication selon la revendication 4, **caractérisé en ce que** la valeur de la section du fil conducteur d'aluminium est multipliée environ par 1,6 par rapport à la valeur de la section d'un fil de cuivre destiné à transporter la même quantité de courant.

6. Procédé de fabrication selon la revendication 4 ou 5, **caractérisé en ce que** le (les) fil(s) réalisé(s) en aluminium plaqué cuivre présente(nt) une proportion de 10 à 20% de cuivre en section.

7. Procédé de fabrication selon l'une quelconque des revendications 4 à 6, **caractérisé en ce que** le calibre des appareils étant de 63A, la section du conducteur dit second conducteur (5) est d'environ 4mm², tandis que la section du premier conducteur (4) est environ de 12mm².

8. Procédé de fabrication selon la revendication 2, **caractérisé en ce que** le pliage et le conformage précités sont réalisés par l'intermédiaire de moyens de formage appropriés.

9. Procédé de fabrication selon l'une quelconque des revendications précédentes, **caractérisé en ce que** l'assemblage mécanique et électrique des deux conducteurs précités (4,5) est réalisée par brasure ou soudure.

## Patentansprüche

1. Herstellungsverfahren für eine Anschlussvorrichtung zum elektrischen Anschluss der Klemmen mehrerer, auf einem gemeinsamen Träger aneinandergereihter modularer elektrischer Schaltgeräte, welche Vorrichtung einen zum Stromtransport bestimmten ersten Teil (1) mit länglichem Grundkörper sowie einen zur Stromverteilung auf die genannten Schaltgeräte bestimmten zweiten Teil (2) umfasst, welcher zweite Teil eine bestimmte Anzahl von Zähnen (3) umfasst, die annähernd rechtwinklig zum genannten Grundkörper angeordnet sind und dazu dienen, in die Klemmen der genannten Schaltgeräte eingeführt zu werden, welches Verfahren darin besteht, zur Herstellung des genannten ersten und des genannten zweiten Teils (1, 2) zwei unterschiedliche Leiterdrähte (4, 5) zu verwenden, die im Wesentlichen aus Aluminium bestehen, wobei der erste Leiterdraht größer bemessen ist als der zweite, sowie darin, die genannten Zähne (3) aus dem zweiten Leiterdraht (5) herzustellen und anschließend die beiden Leiterdrähte (4, 5) elektrisch und mechanisch miteinander zu verbinden, wobei die Querschnitte des genannten ersten und des genannten zweiten Leiterdrahts so bemessen sind, dass ihre Größe gerade ausreicht, um die genannten Funktionen des Stromtransports bzw. der Stromverteilung zu erfüllen, die Funktion des Stromtransports durch beide Leiterdrähte, hauptsächlich jedoch durch den größer bemessenen Leiter, und die Funktion der Stromverteilung auf die Anschlüsse durch den kleineren, gerade ausreichend bemessenen zweiten Leiter erfüllt werden.

2. Herstellungsverfahren für eine Anschlussvorrichtung nach Anspruch 1, **dadurch gekennzeichnet, dass** die genannten Zähne (3) durch Umbiegen und Formen des genannten zweiten Leiters (5) hergestellt werden, derart, dass mehrere aufeinanderfolgende Zähne (3) gebildet werden, die jeweils aus zwei zu beiden Seiten eines Biegebereichs (6) angeordneten, übereinander liegenden Abschnitten (7, 8) bestehen.

3. Herstellungsverfahren für eine Anschlussvorrichtung nach Anspruch 2, **dadurch gekennzeichnet, dass** die mechanische und elektrische Verbindung der beiden Teile (1, 2) miteinander im Bereich der zwischen zwei aufeinanderfolgenden Zähnen (3) ausgebildeten Abschnitte (9) des zweiten Leiters (5) und/oder zwischen diesen Abschnitten erfolgt, wobei die genannten Abschnitte (9) annähernd parallel zur Längsrichtung des länglichen Grundkörpers (4) angeordnet sind.

4. Herstellungsverfahren nach irgendeinem der Ansprüche 1 bis 3, **dadurch gekennzeichnet, dass** der erste Teil (1) aus einem unbeschichteten oder mit Kupfer beschichteten Aluminium-Leiterdraht (4) und der zweite Teil (2) aus einem kupferbeschichteten Aluminium-Leiterdraht oder aus massivem Kupfer hergestellt werden.

5. Herstellungsverfahren nach Anspruch 4, **dadurch gekennzeichnet, dass** der Querschnitt des Aluminium-Leiterdrahts einen um etwa den Faktor 1,6 größeren Wert aufweist als der Querschnitt eines zum Stromtransport mit der gleichen Strommenge bestimmten Kupferdrahts.

6. Herstellungsverfahren nach Anspruch 4 oder 5, **dadurch gekennzeichnet, dass** die kupferbeschichteten Aluminium-Leiterdrähte etwa 10 bis 20 Querschnittsprozent Kupfer aufweisen.

7. Herstellungsverfahren nach irgendeinem der Ansprüche 4 bis 6, **dadurch gekennzeichnet, dass** bei einer Nenngröße der Schaltgeräte von 63 A der Querschnitt das als zweiter Leiter (5) bezeichneten Leiters etwa 4 mm² beträgt, während der Querschnitt der ersten Leiters (4) etwa 12 mm² beträgt.

8. Herstellungsverfahren nach Anspruch 2, **dadurch gekennzeichnet, dass** das genannte Umbiegen und Formen mithilfe geeigneter Formgebungswerkzeuge erfolgt.

9. Herstellungsverfahren nach irgendeinem der vorhergehenden Ansprüche, **dadurch gekennzeichnet, dass** die elektrische und die mechanische Verbindung der beiden genannten Leiter miteinander (4, 5) durch Löten oder Schweißen erfolgt.

## Claims

1. Method for manufacturing a device for the electrical connection of terminals belonging to several modular electric units mounted side by side on one and the same mounting support, said device comprising a first part (1) intended to transport the current and comprising a longitudinal body, and a second part (2) intended for the distribution of the current to said units, this second part comprising a certain number of teeth (3) extending substantially at right angles to said body and intended to be inserted respectively into the terminals of said units, consisting in taking two distinct conductor wires (4, 5) to produce, respectively, the abovementioned first (1) and second (2) parts, said conductor wires being principally produced from aluminium, the first conductor wire being of a higher rating than the second, then in producing, from the second conductor wire (5), the abovementioned teeth (3), then in mechanically and electrically linking these two conductor wires (4, 5) to one another, the sections of the abovementioned first and second conductor wires being adapted so as to adjust the rating of said conductors substantially to the precise value needed to produce the abovementioned respective functions of transport and electrical connection, the transport function being produced by both the conductors, but mostly by the conductor of a higher rating, whereas the connection function is produced by the second conductor with exactly the right lower rating.

2. Method for manufacturing a connection device according to Claim 1, **characterized in that** the abovementioned teeth (3) are produced by bending and shaping said second conductor wire (5), so as to form a succession of teeth (3) each made up of the superposition of the two parts (7, 8) situated on either side of a bending area (6).

3. Method for manufacturing a connection device according to Claim 2, **characterized in that** the mechanical and electrical linking of the two parts (1, 2) together is carried out at the level of the portions (9) of the second conductor (5) situated between two successive teeth (3) and/or between these portions, said portions (9) extending substantially parallel to the longitudinal direction of the longitudinal body (4).

4. Manufacturing method according to any one of Claims 1 to 3, **characterized in that** the first part (1) is produced from an aluminium conductor wire (4) with or without copper plating, whereas the second part (2) is produced from an aluminium conductor wire (5) that is copper-plated, or else solid copper.

5. Manufacturing method according to Claim 4, **characterized in that** the value of the section of the aluminium conductor wire is multiplied approximately by 1.6 relative to the value of the section of a copper wire intended to transport the same quantity of current.

6. Manufacturing method according to Claim 4 or 5, **characterized in that** the wire(s) produced in copper-plated aluminium have a proportion of 10 to 20% copper in section.

7. Manufacturing method according to any one of Claims 4 to 6, **characterized in that**, the rating of the units being 63A, the section of the conductor called second conductor (5) is approximately 4 mm², whereas the section of the first conductor (4) is approximately 12 mm².

8. Manufacturing method according to Claim 2, **characterized in that** the abovementioned bending and shaping are carried out using appropriate forming means.

9. Manufacturing method according to any one of the preceding claims, **characterized in that** the mechanical and electrical assembly of the abovementioned two conductors (4, 5) is carried out by brazing or soldering.
